# EUROPEAN PATENT SPECIFICATION

(11) **EP 0 525 677 B1**
(45) Date of publication and mention of the grant of the patent: **13.12.1995**
(21) Application number: 92112717.1
(22) Date of filing: 24.07.1992
(51) Int. Cl.: B01D 53/56, B01D 53/62, B01D 53/72, B01J 23/89, B01J 23/00

(54) **Exhaust gas purifying catalyst and method of preparing the same**
Katalysator zur Reinigung von Abgasen und Verfahren zu seiner Herstellung
Catalyseur pour la purification des effluents gazeux et méthode pour sa préparation

(30) Priority: 29.07.1991 JP 212943/91; 26.02.1992 JP 76175/92
(43) Date of publication of application: 03.02.1993
(73) Proprietor: DAIHATSU MOTOR COMPANY, LTD., Ikeda-shi, Osaka-fu 563 (JP); KABUSHIKI KAISHA TOYOTA CHUO KENKYUSHO, Aichi-gun Aichi-ken, 480-11 (JP)
(72) Inventor: Tanaka, Hirohisa, Ohmihachiman-shi, Shiga-ken 523 (JP); Tsuboi, Hidefumi, Yao-shi, Osaka-fu 581 (JP); Matsumoto, Shinichi, Aichi-gun, Aichi-ken 470-01 (JP); Kimura, Mareo, Nagoya-shi, Aichi-ken 468 (JP); Sobukawa, Hideo, Aichi-gun, Aichi-ken 470-01 (JP); Ozawa, Masakumi, Kasugai-shi, Aichi-ken 487 (JP)
(74) Representative: Goddar, Heinz J., Dr.

(56) References cited:
- FR-A- 2 174 180
- FR-A- 2 343 505
- US-A- 4 921 829

## Description

### BACKGROUND OF THE INVENTION

### Field of the Invention

The present invention relates to an exhaust gas purifying catalyst which has excellent ability to convert carbon monoxide (CO), hydrocarbon (HC) and nitrogen oxide (NOx) into CO₂, H₂O and N₂ respectively. More particularly, it relates to a three way catalyst for purifying exhaust gas which can excellently purify carbon monoxide, hydrocarbon and nitrogen oxide even if the same is used at a temperature exceeding 900 °C, an exhaust gas purifying catalyst which exhibits purification activity also at a low exhaust gas temperature condition such as idling of an automobile gasoline engine or the like, and a method of preparing the same.

### Description of the Background Art

As to a three way catalyst for purifying exhaust gas, a precious metal catalyst, which is prepared from an alumina support supporting a precious metal such as Pt, Rh or Pd, is put into practice for wide use.

On the other hand, a compound oxide having a perovskite structure, which is formed of a rare earth metal, an alkaline earth metal and a transition metal, is expected for practical use as a low-priced three way catalyst for purifying exhaust gas which can purify CO, HC and NOx. However, such a catalyst is suitable for use at a temperature of not more than 800 °C, and cannot sufficiently cope with automotive exhaust gas which requires high catalytic activity in a high temperature range exceeding 900°C as well as high temperature durability. Such a perovskite compound oxide is sintered when the same is used at a high temperature exceeding 900 °C, and hence its effective surface area is reduced to cause extreme reduction of catalytic activity. Further, the perovskite compound oxide is not sufficiently applicable to a three way catalyst for automotive exhaust gas due to inferiority in purification of NOx, although the same is excellent in purification of CO and HC.

In order to prevent reduction of activity caused by sintering when a compound oxide having a perovskite structure is used as a catalytic component at a high temperature exceeding 900 °C for a long time thereby improving its ability to purify NOx, there has been proposed an exhaust gas purifying catalyst which is obtained by coexistently mixing a perovskite compound oxide, a heat resistant compound oxide and a precious metal with each other (refer to US-A-4921829). The heat resistant compound oxide which is employed therein is similar in chemical property to the perovskite compound oxide serving as a catalytic component, and contains a rare earth metal and an alkaline earth metal.

In this catalyst, a precious metal such as Pd is carried on the surface of the fine perovskite compound oxide in a dispersed state.

### SUMMARY OF THE INVENTION

In order to prevent a compound oxide catalyst having a perovskite structure from reduction of catalytic activity at a temperature exceeding 900°C as well as to improve its ability to purify NOx similarly to the aforementioned invention disclosed in US-A-4921829, a first object of the present invention is to provide a catalyst containing a heat resistant oxide which is different in structure from that of the said invention.

The aforementioned conventional catalyst exhibits only insufficient purification activity at a low exhaust gas temperature condition in idling of an automobile or the like. With severe regulation of exhaust gas, awaited is a catalyst which exhibits sufficient purification activity at such a low exhaust gas temperature condition.

A second object of the present invention is to provide an exhaust gas purifying catalyst which exhibits sufficient purification activity at a low exhaust gas temperature condition.

A third object of the present invention is to provide a method of preparing the same.

In order to attain the aforementioned first object, an exhaust gas purifying catalyst according to a first embodiment of the invention comprises the features of claim 1.

In order to attain the aformentioned second object, an exhaust gas purifying catalyst according to a second embodiment of the invention comprises the features of claim 4.

The heat resistant oxide is preferably prepared from a compound oxide which is expressed in a general formula (CeZrLn)O₂, where Ln represents a rare earth metal excluding Ce, such as CeO₂, (CeZr)O₂, (CeZrY)O₂, (CeZrLa)O₂ or (CeZrNd)O₂. (CeZr)O₂ is superior to CeO₂ in an effect of improving purification activity at a high temperature, while (CeZrLn)O₂ is more preferable since the same is further superior in the effect of improving purification activity at a high temperature.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a graph showing three way puficiation activity levels of Example 12 and Comparative Examle e;
Fig. 2 is a photograph showing a section of a catalyst according to Example 14;
Fig. 3 is an enlarged photograph showing the section of the catalyst according to Example 14; and
Fig. 4 is a further enlarged photograph showing the section of the catalyst according to Example 14.

### DETAILED DESCRIPTION OF THE INVENTION

A first feature of the first invention resides in a point that a catalytic component made of a perovskite compound oxide is coexistently mixed with a heat resistant oxide. The heat resistant oxide contains a cerium oxide and a zirconium oxide, or furher contains an oxide of a rare earth metal excluding cerium, such that these oxides at least partially exist in the form of compound oxides or solid solutions, to be capable of suppressing sintering also at a high temperature exceeding 900 °C. Such an effect of the heat resistant oxide is so availably provided when the catalytic component is carried on the heat resistant oxide or powder of the catalytic component is mixed with that of the heat resistant component, that the catalytic component is still maintained on the support in a highly dispersed state or exists between particles of the heat resistant oxide in highly dispersed states also after the catalyst is used at a high temperature exceeding 900 °C for a long time. Since the heat resistant oxide is thermally stable and hardly reactive with the catalytic component also at a high temperature exceeding 900 °C, it is possible to prevent reduction of catalytic activity which may be caused by breakage of the perovskite structure of the catalytic component.

A second feature of the first invention resides in a point that a precious metal such as palladium is added to a perovskite compound oxide serving as a catalytic component. While a compound oxide having a perovskite structure itself can be used as a three way catalyst, its purification ability with respect to NOx is slightly inferior as compared with those for HC and CO. Therefore, a small amount of a precious metal is added in order to improve activity with respect to NOx. Such a precious metal is carried on the perovskite compound oxide and a heat resistant oxide. The as-carried precious metal causes solid solution and precipitation on the reactive perovskite compound oxide, while the same is carried in a precipitated state in high dispersion on the unreactive heat resistant oxide having a high specific surface area. Thus, the precious metal is hardly sintered even at a high temperature exceeding 900 °C at an exhaust gas fluctuation atmosphere, to keep highly purification activity at a high degree.

Thus, the first invention provides a three way catalyst for purifying exhaust gas, which is durable also at a high temperature exceeding 900°C, at a low cost.

The perovskite compound oxide forming the catalytic component of the catalyst according to the first invention is expressed in a general formula Ln₁-xAxMO₃ The total catalyst preferably contains 1 to 80 percent by weight of this comosite oxide. If the content is less than 1 percent by weight, catalytic activity is unpreferably reduced, while no sufficient effect of the heat resistant oxide is attained if the content exceeds 80 percent by weight. The compound oxide may have arbitrary shape, grain size, purity, specific surface area and the like in ordinary ranges for serving as a catalytic component.

The heat resistant oxide may be employed in states of shape, grain size, purity and specific surface area similar to those of a widely used support such as Al₂O₃. For example, the heat resistant oxide preferably has a specific surface area of at least 20 m²/g, in order to maintain the catalytic component in a highly dispersed state. While the ratios of Ce, Zr and the rare earth metal contained in the heat resistant oxide are not particularly restricted, a preferable atomic ratio of Zr to Ce is 5/100 to 100/100, more preferably 5/100 to 50/100, and that of the rare earth metal excluding Ce to Ce is 0/100 to 100/100, more preferably 5/100 to 30/100.

The precious metal serving as another catalytic componet is prepared from one or at least two metals selected from the platinum group of Ru, Rh, Pd, Os, Ir and Pt. When Pd is selected from these precious metals, an NOx purifying activity is most improved. The total catalyst preferably contains 0.01 to 5 percent by weight, more preferably 0.1 to 2 percent by weight of the precious metal. If the content is less than 0.01 percent by weight, the NOx purifying ability is insufficiently improved, while the NOx purifying ability is saturated if the content exceeds 5 percent by weight. Such a precious metal is employed in arbitrary shape, grain size, purity and specific surface area in ordinary ranges for serving as a component of a three way catalyst.

The catalyst according to the first invention can be prepared by a method which is generally carried out for preparing a catalyst. An exemplary preparation method is now described.

In order to prepare a catalyst comprising a catalytic component which is carried on a support, a compound oxide or a solid solution of a heat resistant oxide for serving as the support is first obtained by thermally decomposing an aqueous solution containing a cerium salt and a zirconium salt or further containing a rare earth metal salt at a temperature exceeding 600°C and firing the same, or adding an aqueous solution, which is mixed with a zirconium salt or further mixed with a rare earth metal salt at a prescribed stoichiometric ratio, to commercially available ceria powder of at least 100 m²/g, drying the mixture in the air at about 100 °C for 5 to 12 hours and thereafter firing the mixture in the air at 600°C for 3 hours. An aqueous solution, which is mixed with nitrates of metals forming a perovskite compound oxide serving as a catalytic component at a prescribed stoichiometric ratio, is added to the as-formed support powder of the heat resistant oxide, so that the mixture is dried in the air at about 100°C for 5 to 12 hours and thereafter further fired in the air at 550 to 800°C for 3 to 10 hours. The nitrate is thermally decomposed by this heat treatment, so that the perovskite compound oxide is carried on the support powder.

Then, a precious metal such as Pt, Pd or Rh is carried on the perovskite compound oxide which is carried on the heat resistant compound oxide support in the aforementioned manner. The aforementioned powder is impregnated with an aqueous solution of palladium nitrate, for example, dried in the air at about 100 °C for 5 to 12 hours, and thereafter fired in the air at 600°C for 3 hours, to carry Pd.

Alternatively, fine powder of the perovskite compound oxide and that of the heat resistant compound oxide may be mixed with each other to thereafter carry the precious metal. In order to prepare such fine powder of the perovskite compound oxide, a prescribed amount of a neutralizer such as sodium carbonate or ammonium carbonate is added to an aqueous solution which is mixed with nitrates or oxalates of metals forming the perovskite compound oxide and coprecipitated. Then the mixture is washed, filtered, dried, fired in the air at 500 to 600 °C for 3 to 5 hours, thereafter pulverized, and further fired in the air at 550 to 800°C for 3 to 5 hours, to prepare fine powder. This powder preferably has a specific surface area of at least several m²/g, for example, more than 5 m²/g. The as-formed fine powder of the pervoskite compound oxide is mixed with powder of a heat resistant oxide to carry a precious metal in a method similar to the above, thereby obtaining the target catalyst.

A binder can be added to the catalyst for formation into a prescribed shape, or water can be added thereto for preparation of slurry, which is applied to a support substrate. Alternatively, a base material can be covered with the heat resistant oxide, to carry the perovskite compound oxide and the precious metal serving as catalytic components.

The feature of the second invention resides in a double structure formed by a core of a perovskite compound oxide containing no precious metal and another perovskite compound oxide containing a precious metal which is dispersed around the core. The precious metal or a precious metal oxide solidly dissolved in the outer perovskite compound oxide layer or carried on the surface of the inner perovskite compound oxide serving as the core mutually influences with the perovskite compound oxides, to contribute to purification.

The precious metal is prepared from one or at least two metals selected from a group of Pd, Pt, Ru, Rh and Ir. Pd is particularly preferable since the same improves low temperature purification activity and NOx purification activity.

A method of preparing the catalyst according to the second invention comprises steps of making 100 parts by weight of the aforementioned perovskite compound oxide or a mixture of the aforementioned perovskite compound oxide and a heat resistant oxide impregnated with and/or adsorb the precious metal through a precious metal salt solution containing 0.2 to 5.0 parts by weight of a precious metal in total conversion and being adjusted to be not more than pH 4, drying the as-formed mixture and thereafter firing the same at a temperature of 250 to 800°C. When the perovskite compound oxide is dipped in the precious metal salt solution which is adjusted to be not more than pH 4, elements contained in a crystal are partially eluded and a plurality of salts containing the precious metal are bonded onto the periphery of a core of remaining perovskite compound oxide powder and heat resistant oxide powder which are not eluded. This mixture is dried at 130°C for 24 hours, for example, and thereafter fired in the air at a temperature exceeding 250°C, preferably at 500 to 800 °C for 3 hours, for example, to form a perovskite compound oxide crystal in which the precious metal is solidly dissolved around the core, thereby attaining a double structure of the oxide. An excessive part of the precious metal, which has been insolvable in the recrystallized perovskite compound oxide crystal, is dispersed in a metal state or in the form of a precious metal oxide.

A water soluble precious metal salt is preferably prepared by chloride such as PdCl₂, PtCl₂ or RuCl₃·3H₂O, nitrate such as Pd(NO₃)₂, Ru(NO₃)₃ or Rh(NO₃)₃, or a dinitrodiamine salt such as Pd(NO₂)₂(NH₃)₂ or Pt(NO₂)₂(NH₃)₂, whose aqueous solution exhibits a strong acid property.

The catalyst according to the second invention exhibits excellent purification activity with respect to HC, CO and NOx also at a low exhaust gas temperature of 100 to 200°C in idling or the like.

When a heat resistant oxide is contained, the catalyst exhibits excellent durability also at a high temperature exceeding 900 °C.

The preparation method according to the present invention is adapted to dissolve and recrystallize the perovskite compound oxide by a simple method of controlling the pH of the solution of the precious metal to be carried in the perovskite compound oxide or a mixture of the perovskite compound oxide and the heat resistant oxide, so that the precious metal can be solidly dissolved in its crystal for providing excellent exhaust gas purification activity.

### Examples of First Invention

### Example 1

A heat resistant compound oxide for serving as a support was prepared from 111. 9 g of commercially available cerium oxide (CeO₂) powder having a high specific surface area with a specific surface area of 130 m²/g and purity of 99.9 %/TREO (total rare earth oxide), and 147.9 g of an aqueous solution of oxy zirconium nitrate (ZrO(NO₃)₂), having liquid specific gravity of 1.51 and containing 25.0 percent by weight of ZrO(NO₃)₂ in ZrO₂ conversion, and 26.0 g of an aqueous solution of yttrium nitrate (Y(NO₃)₃), having liquid specific gravity of 1.62 and containing 21.7 percent by weight of Y(NO₃)₃ in Y₂O₃ conversion, were added to the heat resistant compound oxide, stirred and mixed with each other, so that the as-obtained mixture was dried in the air at 110 °C for 10 hours. Thereafter the mixture was fired in the atmosphere at 600 °C for 3 hours, to obtain about 150 g of a (Ce_{0.65}Zr_{0.30}Y_{0.05})0₂ compound oxide.

Then, 50 g of this powder was mixed with 100 ml of an aquous solution, in which 70.4 g of lanthanum nitrate (La(NO₃)₃·6H₂O), 17.7 g of cerium nitrate (Ce(NO)₃)₂·6H₂O) and 59.2 g of cobalt nitrate (Co(NO)₃)₂·6H₂O) were dissolved, and the mixture was dried in the air at 110°C for 10 hours. Thereafter the mixture was fired in the air at 800°C for 3 hours to thermally decompose the nitrate components, thereby obtaining powder carrying a perovskite compound oxide (La_{0.8}Ce_{0.2})CoO₃ containing Co on (Ce_{0.65}Zr_{0.30}Y_{0.05})0₂

Thereafter this powder was impregnated with an aqueous solution of palladium nitrate, dried in the air at 110 °C for 10 hours, and further fired in the air at 600°C for 3 hours, to prepare a catalyst (sample No. 1) carrying 0.5 g of Pd. This catalyst was composed of (La_{0.8}Ce_{0.2})CoO₃: (Ce_{0.65}Zr_{0.30}Y_{0.05})0₂:Pd = 50:50:0.5 in weight ratios.

### Example 2

A catalyst (sample No. 2) according to Example 2 was prepared in a simplar manner to Example 1 by employing 50 g of the aforementioned (Ce_{0.65}Zr_{0.30}Y_{0.05})0₂ powder, except for that 70.4 g of lanthanum nitrate, 17.7 g of cerium nitrate, 23.7 g of cobalt nitrate and 49.6 g of iron nitrate (Fe(NO₃)₃·9H₂O) were added thereto. This catalyst was composed of
(La_{0.8}Ce_{0.2})(Co_{0.4}Fe_{0.6})O₃: (Ce_{0.65}Zr_{0.30}Y_{0.05})0₂:Pd = 50:50:0.5 in weight ratios.

### Example 3

98.6 g of an aqueous solution of oxy zirconium nitrate and 15.7 g of an aqueous solution of yttrium nitrate were added to 132.6 g of the cerium oxide powder employed in Example 1, to obtain a heat resistant compound oxide of (Ce_{0.77}Zr_{0.20}Y_{0.03})0₂ in a similar manner to Example 1.

Then, 50 g of this powder was employed to prepare a catalyst (sample No. 3) according to Example 3, with blending ratios similar to those of Example 2 in a similar manner thereto. This catalyst was composed of
(La_{0.8}Ce_{0.2}) (Co_{0.4}Fe_{0.6})O₃: (Ce_{0.77}Zr_{0.20}Y_{0.03})0₂:Pd = 50:50:0.5 in weight ratios.

### Example 4

An aqueous solution, in which 79.2 g of lanthanum nitrate, 8.9 g of cerium nitrate, 23.7 g of cobalt nitrate and 49.6 g of iron nitrate were dissolved, was added to 50 g of the heat resistant compound oxide powder of (Ce_{0.77}Zr_{0.20}Y_{0.03})0₂ prepared in Example 3, and the mixture was dried and fired in a similar mannner to Example 1, to obtain powder carrying
(La_{0.9}Ce_{0.1}) (Co_{0.4}Fe_{0.6})O₃ on (CeZrY) O₂.

Thereafter this powder was impregated with a nitrate solution of dinitrodiamine platinum ((NH₃)₂(NO₂)₂Pt), to prepare a catalyst (sample No. 4) according to Example 4 in a similar manner to Example 1. This catalyst was composed of
(La_{0.9}Ce_{0.1}) (Co_{0.4}Fe_{0.6})O₃: (Ce_{0.77}Zr_{0.20}Y_{0.03})0₂ :Pt = 50:50:0.5 in weight ratios.

### Example 5

50 ml of an aqueous solution, in which 147.9 g of an aqueous solution of oxy zirconium nitrate and 22.1 g of lanthanum nitrate (La(NO₃)₃·6H₂O) were dissolved, was added to 111.9 g of the cerium nitrate powder employed in Example 1, to obtain a heat resistant compound oxide of (Ce_{0.65}Zr_{0.30}La_{0.05})0₂ in a similar manner to Example 1.

Then, 50 g of this powder was employed to prepare a catalyst (sample No. 5) according to Example 5 in a similar manner to Example 1, except for that 74.1 g of lanthanum nitrate, 9.1 g of strontium nitrate (Sr(NO₃)₂), 31.1 g of cobalt nitrate and 43.2 g of iron nitrate were added. This catalyst was composed of
(La_{0.8}Sr_{0.2}) (Co_{0.5}Fe_{0.5})O₃ (Ce_{0.65}Zr_{0.30}La_{0.05})O₂:Pd = 50:50:0.5 in weight ratios.

### Example 6

Powder of a perovskite compound oxide
(La_{0.8}Ce_{0.2}) (Co_{0.4}Fe_{0.6})O₉ was prepared. 103.9 g of lanthanum nitrate, 26.1 g of cerium nitrate, 34.9 g of cobalt nitrate and 72.7 g of iron nitrate were dissolved in pure water, to prepare 0.3 l of an aqueous solution. Then, o.5 l of an aqueous solution, in which 50 g of sodium carbonate was dissolved, was prepared as a neutralizer/coprecipitator. The neutralizer/coprecipitator was dripped on the aforementioned aqueous solution, to obtain a coprecipitant. This coprecipitant was sufficiently washed, filtered and then vacuum-dried. This substance was fired in the air at 600 °C for 3 hours, then pulverized, thereafter fired in the air at 800 °C for 3 hours, and further pulverized to prepare powder of
(La_{0.8}Ce_{0.2}) (Co_{0.4}Fe_{0.6})O₃.

20 g of the as-obtained powder of
(La_{0.8}Ce_{0.2}) (Co_{0.4}Fe_{0.6})O₃ was sufficiently mixed with 80 g of the (Ce_{0.65}Zr_{0.30}Y_{0.05})0₂ prepared in Example 1. This mixed powder was impregnated with palladium through an aqueous solution of palladium nitrate, dried at 110 °C for 10 hours, and fired in the air at 600°C for 3 hours, to prepare a catalyst (sample No. 6) carrying 0.5 g of Pd.

### Example 7

In place of the method of preparing the perovskite compound oxide according to Example 6, 76.7 g of lanthanum nitrate, 38.2 g of neodium nitrate (Nd(NO₃)₃·6H₂O), 43.7 g of cobalt nitrate and 60.6 g of iron nitrate were employed to prepare powder of
(La_{0.59}Nd_{0.29}Ce_{0.12}) (Co_{0.5}Fe_{0.5})O₃.

80 g of this powder was sufficiently mixed with 20 g of the (Ce_{0.65}Zr_{0.30}Y_{0.05})0₂ powder prepared in Example 1, to prepare a catalyst (sample No. 7) carrying 0.5 g of Pd in a similar manner to Example 6.

### Example 8

98.6 g of oxy zirconium nitrate was added to 137.70 g of the cerium oxide powder employed in Example 1, to obtain heat resistant compound oxide powder of
(Ce_{0.8}Zr_{0.7})O₂ in a similar manner to Example 1.

50 g of this heat resistant compound oxide powder was sufficiently mixed with 50 g of the perovskite powder of (La_{0.8}Ce_{0.2}) (Co_{0.4}Fe_{0.6})O₃ according to Example 6, to prepare a catalyst (sample No. 8) carrying 0.5 g of Pd.

### Example 9

80 g of the (La_{0.8}Ce_{0.2}) (Co_{0.4}Fe_{0.6})O₃ powder according to Example 6 was sufficiently mixed with 20 g of heat resistant compound oxide powder of (Ce_{0.8}Zr_{0.2})0₂ according to Example 8, to prepare a catalyst (sample No. 9) carrying 0.5 g of Pd.

### Example 10

In place of the cerium nitrate employed in Example 6, 12.7 g of strontium nitrate was employed to prepare perovskite powder of (La_{0.8}Sr_{0.2}) (Co_{0.4}Fe_{0.6})O₃ in a similar manner thereto. 80 g of this powder was sufficiently mixed with 20 g of the heat resistant compound oxide powder of (Ce_{0.8}Zr_{0.2})0₂ according to Example 8, to prepare a catalyst (sample No. 10) carrying 0.5 g of Pd.

### Comparative Example 1

100 g of the perovskite compound oxide powder of (La_{0.8}Ce_{0.2}) (Co_{0.9}Fe_{0.6})O₃ according to Example 6 was employed with an aqueous solution of palladium nitrate, to prepare a catalyst (sample No. C1) carrying 0.5 g of Pd according to comparative example 1 in a similar manner to Example 1.

### Comparative Example 2

In place of the heat resistant compound oxide prepred in Example 1, 50 g of commercially available cerium oxide powder having a high specific surface area was employed to carrry (La_{0.8}Ce_{0.2})CoO₃ on CeO₂ in a similar manner to Example 1, as well as to carry 0.5 g of Pd, thereby preparing a catalyst (sample No. C2) according to comparative example 2. This catalyst was composed of (La_{0.8}Ce_{0.2})CoO₃:CeO₂:Pd = 50:50:0.5 in weight ratios.

### Comparative Example 3

(Ce_{0.65}Zr_{0.30}Y_{0.05})0₂ of Example 1 was replaced by commercially available γ-Al₂O₃ having a specific surface area of 110m²/g, to prepare a catalyst (sample No. C3) according to comparative example 3 in a similar manner to the above.

### Comparative Example 4

50 g of the perovskite compound oxide powder of (La_{0.8}Ce_{0.2}) (Co_{0.4}Fe_{0.6})O₃ prepared in Example 6 was sufficiently mixed with 50 g of commercially available SrZrO₂ powder, to prepare a catalyst (sample No. C4) carrying 0.5 g of Pd according to comparative example 4.

### Test

Endurance tests were made on the catalysts prepared in Examples and comparative examples, in exhaust gas of an inlet gas temperature of 930 °C for 5 hours, in relation to purification activity. The gas was composed of 1.0 % of carbon monoxide (CO), 0.1 % of propylene (C₃H₆), 10 % of carbon dioxide (CO₂) and 4 % of water (H₂O) under a fluctuating condition of oxygen (O₂) with a residual part of nitrogen (N₂).

### Evaluation

As to the catalysts which were subjected to the aforementioned endurance tests, purification factors for carbon monoxide, propylene and nitrogen oxide at 450°C were measured. As to such measurement, the pulverulent catalysts were pressure-formed into pellets of about 2 mm in diameter, and charged into reaction tubes. The measurement was carried out at a space velocity of 30000/h., with a gas composition of 0.7 % of CO, 0.15 % of C₃H₆, 10 % of CO₂, 10 % of H₂O, 0.23 % of H₂ and 0.15 % of NO, under a fluctuating condition of O₂ with a residual part of N₂.

Table 1 shows the results and the catalytic components. It is understood from Table 1 that the catalysts according to Examples are superior in endurance to those of comparative examples.

### Examples of Second Invention

### Basic Operation A: Method of Preparing Perovskite Composite Oxide Crystal Powder

Powder of a perovskite compound oxide
(La_{0.8}Ce_{0.2}) (Co_{0.4}Fe_{0.6})O₃ was prepared. 103.9 g of lanthanum nitrate, 26.1 g of cerium nitrate, 34.9 g of cobalt nitrate and 72.7 g of iron nitrate were dissolved in pure water, to prepare 0.3 l of an aqueous solution. Then, a neutralizer/coprecipitator was prepared from 0.5 l of an aqueous solution in which 50 g of sodium carbonate was dissolved. The neutralizer/coprecipitator was dripped on the above aqueous solution, to obtain a coprecipitant. This coprecipitant was sufficiently washed, filtered and thereafter vacuum-dried. This substance was fired in the air at 600 °C for 3 hours, pulverized, thereafter fired in the air at 800°C for 3 hours, and further pulverized, to prepare powder of (La_{0.8}Ce_{0.2}) (Co_{0.4}Fe_{0.6})O₃.

### Basic Operation B: Preparation of Heat Resistant Oxide

111.9 g of commercially available cerium oxide powder, having a high specific surface area with a specific surface area of 170 m²/g and purity of 99.9 % /TREO, was prepared as a heat resistant oxide for serving as a co-catalyst, and 147.9 g of an aqueous solution of oxy zirconium nitrate (ZrO(NO₃)₂), having liquid specific gravity of 1.51 and containing 25.0 percent by weight of ZrO(NO₃)₂ in ZrO₂ conversion, and 26.0 g of an aqueous solution of yttrium nitrate (Y(NO₃)₂), having liquid specific gravity of 1.62 and containing 21.7 percent by weight of Y(NO₃)₂ in Y₂O₃ conversion, were added to the heat resistant oxide, stirred and mixed with each other, and the as-formed mixture was dried in the air at 110 °C for 10 hours. Thereafter the mixture was fired in the air at 600°C for 3 hours, to obtain about 150 g of a compound oxide of (Ce_{0.65}Zr_{0.30}Y_{0.05})0₂.

### Basic Operation C: Slurry Coating (Carrying)

Slurry was obtained by adding 10 to 100 parts by weight, e.g., 50 parts by weight, of perovskite compound oxide crystal powder and 0 to 90 parts by weight, e.g., 50 parts by weight, of heat resistant oxide powder to 100 parts by weight of pure water and pulverizing and mixing the elements in a ball mill for 12 hours, and introduced into a cordierite ceramic monolithic substrate while an excessive part of the slurry was blown out by an air jet, dried at 130 °C for 4 hours, for example, and thereafter fired in the air at 600 °C for 3 hours, to obtain a support which was uniformly coated with the perovskite compound oxide and the heat resistant oxide.

### Basic Operation D: Method of Carrying Pd and Solid Dissolution in Perovskite Composite Oxide Crystal

As to the coated support obtained in the basic operation C, prepared was a palladium salt solution which was weighed to be 0.2 to 5.0 parts by weight in Pd metal conversion with respect to 100 parts by weight of the perovskite compound oxide powder and the heat resistant oxide powder. The coated support was dipped in this aqueous solution or a diluted solution thereof to impregnate the total amount of Pd into the perovskite compound oxide powder and the heat resistant oxide powder. At this time, the solution was adjusted to be not more than pH 4.

### Example 11

100 parts by weight of (La_{0.8}Ce_{0.2}) (Co_{0.4}Fe_{0.6})O₃ obtained by the basic operation A was uniformly coated on the inner surface of a monolithic support. 56.8 parts by weight of a palladium nitrate solution, a product by Tanaka Kikinzoku Kogyo Kabushiki Kaisha containing 4.4 percent by weight of Pd metal, which was weighed to contain 2.5 parts by weight of palladium nitrate in Pd conversion on the basis of the basic operation D, was dissolved in 100 parts by weight of dilute nitric acid. The pH of this solution was 0.2. The total amount of this solution was impregnated into the aforementioned coated monolithic support, which in turn was dried at 130 °C for 24 hours, and fired in the air at 600°C for 3 hours.

### Example 12

50 parts by weight of (La_{0.8}Ce_{0.2}) (Co_{0.4}Fe_{0.6})O₃ obtained by the basic operation A and 50 parts by weight of (Ce_{0.65}Zr_{0.30}Y_{0.05}) 0₂btained by the basic operation B were uniformly coated onto the inner surface of a monolithic support on the basis of the basic oparation C. On the other hand, 25 parts by weight of a palladium nitrate solution, a product by Takana Kikinzoku Kogyo Kabusiki Kaisha containing 4.4 percent by weight of Pd metal, which was weighted to contain 1.1 parts by weight of palladium nitrate in Pd conversion on the basis of the basic operation D, was dissolved in 100 parts by weight of dilute nitric acid. The pH of this solution was 0.2. The total amount of this solution was impregnated into the aforementioned coated monolithic support, which in turn was dried at 130°C for 24 hours, and fired in the air at 600°C for 3 hours.

### Example 13

A sample was prepared by the basic operations A, B, C and D similarly to Example 12, while a coated monolithic support which was impregnated with a palladium salt solution and dried was thereafter fired in the air at 250 °C for 3 hours.

### Example 14

The basic operations A, B and C were carried out similarly to Example 12, while 25 parts by weight of a palladium nitrate solution containing 4.4 percent by weight of Pd was diluted with 1700 parts by weight of pure water in the basic operation D. The pH of this solution was 1.7. A beaker containing this solution was kept at a temperature of 40°C in a water bath, so that a coated monolithic support formed by the basic operation C was s uck in this palladium salt solution and held for 2 hours, to adsorb palladium. Thereafter the support was dried at 130°C for 24 hours, and thereafter fired in the air at 600 °C for 3 hours.

### Example 15

A sample was prepared in a similar manner to Example 14, except for that aqueous ammonia was added to a palladium nitrate solution to adjust the pH to 3.0.

### Example 16

A sample was prepared in a similar manner to Example 14, except for that aqueous ammonia was added to a palladium nitrate solution to adjust the pH to 4.0.

### Example 17

50 ml of an aqueous solution, in which 22.1 g of lanthanum nitrate (La(NO₃)₃·6H₂O) was dissolved, was employed in place of 26.0 g of the yttrium nitrate solution in the basic operation B, to obtain a heat resistant compound oxide of (Ce_{0.65}Zr_{0.30}La_{0.05})0₂.

A sample was prepared in a similar manner to Example 12, except for that 20 parts by weight of perovskite compound oxide powder of (La_{0.8}Ce_{0.2}) (Co_{0.4}Fe_{0.6})O₃ and 80 parts by weight of the aforementioned heat resistant oxide (Ce_{0.65}Zr_{0.30}La_{0.05})0₂ were employed and 0.44 parts by weight of a palladium nitrate solution was employed with respect to 100 parts by weight of the oxide in Pd conversion.

### Example 18

87.3 g of cobalt nitrate was employed in place of 34.9 g in the basic operation A with no employment of iron nitrate, to prepare perovskite compound oxide powder of (La_{0.8}Ce_{0.2})CoO₃.

In the basic operation B, 137.7 g of cerium nitrate powder and 98.6 g of an oxy zirconium nitrate solution were employed in place of 111.9 g and 147.9 g respectively with no employment of a yttrium nitrate solution, to prepare (Ce_{0.8}Zr_{0.2})0₂ powder.

In the basic operation C, 80 parts by weight of a pervoskite compound oxide and 20 parts by weight of a heat resistant oxide were employed, to prepare a coated support.

In the basic operation D, 80 parts by weight of a palladium nitrate solution containing 4.4 percent by weight of Pd was diluted with 1700 parts by weight of pure water, to contain 3.52 parts by weight of palladium nitrate in Pd conversion. The pH of this solution was 1.1. Thereafter a sample was prepared in a similar manner to Example 13.

### Example 19

20 parts by weight of the perovskite compound oxide (La_{0.8}Ce_{0.2})CoO₃ employed in Example 18 was employed with 80 parts by weight of commercially available CeO₂ in place of the heat resistant oxide. In the basic operation D, 40 parts by weight of a palladium nitrate solution containing 4.4 percent by weight of Pd was diluted with 1700 parts by weight of pure water to contain 1.76 parts by weight of palladium nitrate in Pd conversion. The pH of this solution was 1.4. Thereafter a sample was prepared in a similar manner to Example 17.

### Example 20

An aqueous solution, in which 79.2 parts by weight of lanthanum nitrate, 8.9 parts by weight of cerium nitrate, 23.7 parts by weight of cobalt nitrate and 49.6 parts by weight of iron nitrate were dissolved, was added to 50 parts by weight of a (Ce_{0.65}Zr_{0.30}Y_{0.05})O₃ heat resistant compound oxide powder obtained by the basic operation B, and the mixture was dried in the air at 110°C for 10 hours. Thereafter the mixture was fired in the air at 800°C for 3 hours to thermally decompose the nitrate components, thereby obtaining powder in which a perovskite compound oxide (La_{0.9}Ce_{0.1}) (Co_{0.4}Fe_{0.6})O₃ was carried on (CeZrY)O₂. This powder was composed of (La_{0.9}Ce_{0.1})(Co_{0.4}Fe_{0.6})O₃: (Ce_{0.65}Zr_{0.30}Y_{0.05})O₃ of 50:50 in a weight ratio.

100 parts by weight of this mixed powder was employed in the basic operation C, to prepare a coated support.

In the basic operation D, 7.66 parts by weight of a nitrate solution of dinitrodiamine platinum ((NH₃)₂(NO₂)₂Pt), a product of Tanaka Kikinzoku Kogyo Kabushiki Kaisha containing 4.57 percent by weight of Pt, and 25.4 parts by weight of an aqueous solution of ruthenium nitrate (Ru(NO₃)₂), a product of Tanaka Kikinzoku Kogyo Kabushiki Kaisha containing 3.93 percent by weight of Ru, to contain 0.35 parts by weight of dinitrodiamine platinum in Pt conversion and 1.0 part by weight of ruthenium nitrate in Ru conversion respectively, and this mixture was diluted with 100 parts by weight of pure water. The pH of this solution was 0.5. The total amount of this solution was impregnated into the aforementioned coated monolithic support, which in turn was dried at 130 °C for 24 hours, and fired in the air at 600°C for 3 hours.

### Comparative Example a

A sample was prepared similarly to Example 14, except for that aqueous ammonia was added to a palladium nitrate solution to adjust the pH to 6.9.

### Comparative Example b

A sample was prepared similarly to Example 14, except for that aqueous ammonia was added to a palladium nitrate solution to adjust the pH to 8.5.

### Comparative Example c

A sample was prepared similarly to Example 14, except for that aqueous ammonia was added to a palladium nitrate solution to adjust the pH to 9.7.

### Comparative Example d

12.8 g of strontium nitrate was employed in the basic operation A in place of 26.1 g of cerium nitrate, to obtain powder of a perovskite compound oxide (La_{0.8}Sr_{0.2}) (Co_{0.4}Fe_{0.6})O₃. In the basic operation B, 50 parts by weight of the perovskite compound oxide (La_{0.8}Sr_{0.2}) (Co_{0.4}Fe_{0.6})O₃ was employed, with 50 parts by weight of commercially available SrZrO₃ in place of the heat resistant oxide. Thereafter a sample was prepared in a similar manner to Example 13.

### Comparative Example e

An automotive catalyst of Pt-Rh/γ-Al₂O₃ was employed. The content of Pt-Rh was 0.43 parts by weight.

### Comparative Example f

An automotive catalyst of Pd/γ-Al₂O₃ was employed. The content of Pd was 1.33 parts by weight.

Table 2 shows the results.

### Measurement of Catalytic Activity

Activity levels of the respective samples supported by cordierite monolithic substrates, having cell numbers of 400/inch², of 30 mm in diameter and 50 mm in length with model gases shown in Table 3. Gas temperatures are shown by inlet gas temperatures, which were raised up from the room temperature, the temperature that concentrations of NO, CO and HC( C₃H₆ + C₃H₈ ) are reduced to 50 % of initial concentrations respectively is defined as a 50 % purification temperature.

Rich gases and lean gases were switched every second. The gas jets were passed through the catalysts at a space velocity (SV) of 30,000/h.

**Table 3**

| | Rich Gas | Lean Gas |
|---|---|---|
| CO | 2.6 % | 0.7 % |
| HC | 0.19% | 0.19% |
| H₂ | 0.87% | 0.23% |
| CO | 8 % | 8 % |
| NO | 0.17% | 0.17% |
| O₂ | 0.65% | 1.8 % |
| H₂O | 10 % | 10 % |
| N₂ | Residual Part | Residual Part |
| (The concentration of HC is shown in C₁ conversion) | | |

### Endurance Test

The aforementioned rich and lean gases were switched every 5 seconds to repeat cycles of 30 minutes at 900 °C and 30 minutes at 750 °C 15 times respectively, thereby making endurance tests. After the endurance tests, catalytic activity levels were measured in the aforementioned method.

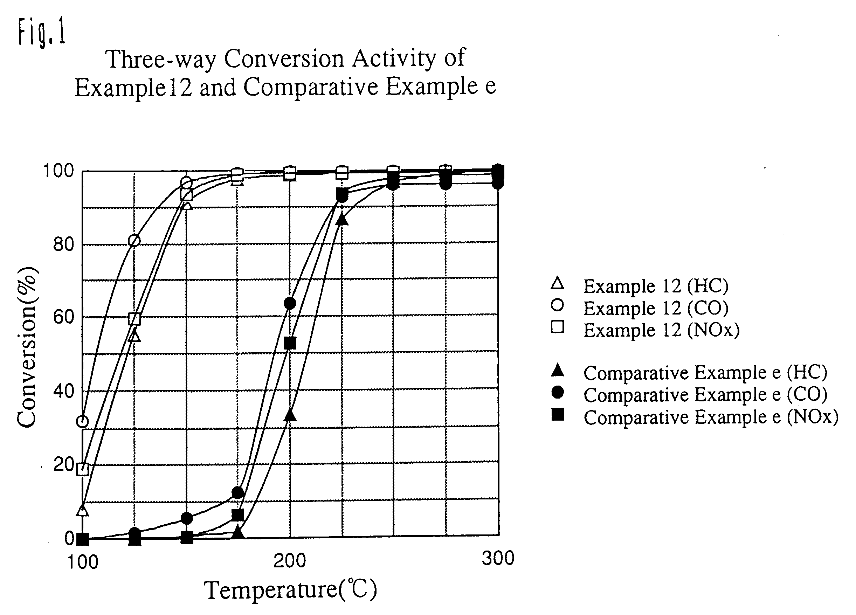

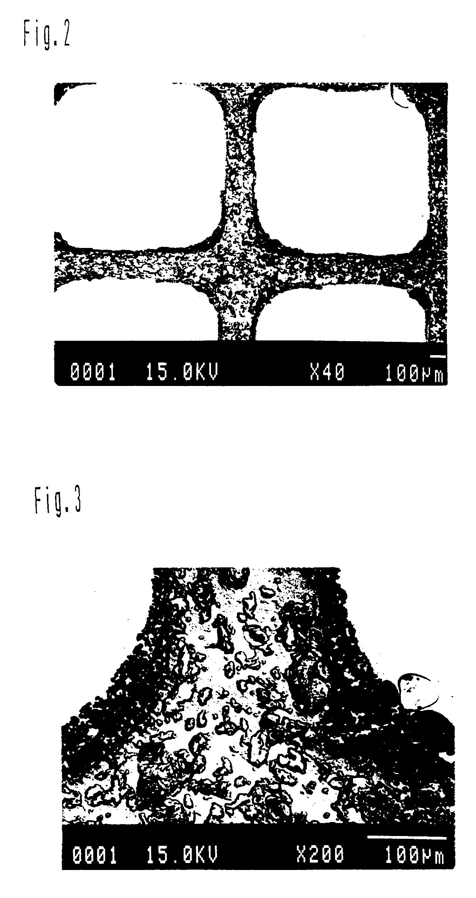

Table 4 shows the results of measurement of catalytic activity levels before and after the endurance tests. As to Example 12 and comparative example e, Fig. 1 shows the results of three way purification activity levels at respective temperatures.

As clearly understood from Table 4, Examples of the present invention exhibited low 50 % purification temperatures, while comparative examples exhibited high values. It is conceivable that recrystallization of the perovskite compound oxide incorporating metallic salts eluded on the surface of the perovskite compound oxide serving as a core and impregnated and/or adsorbed Pd salts was insufficient due to the low firing temperature in Example 12, while this sample was exposed to a high temperature during the endurance test, to form a perovskite compound oxide crystal in which Pd was solidly dissolved, thereby forming a double structure similarly to other Examples.

Through the aforementioned observation, it is conceivable that the inventive catalysts were in double structures formed by cores of oxides containing no precious metals and outer layers of perovskite compound oxides in which precious metals were solidly dissolved.

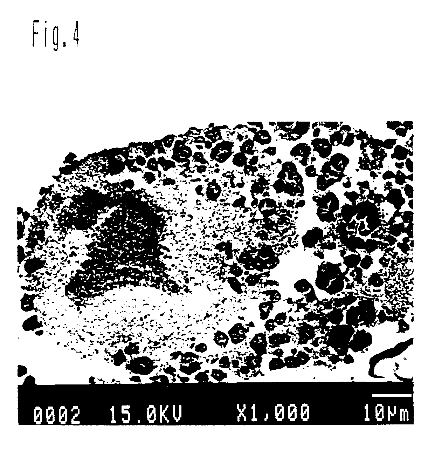

Figs. 2 to 4 are photographs of Example 14 observed with a scanning electron microscope (SEM). The magnifications are successively increased along Figs. 2 to 4. According to these photographs, it is observed that fine particles of a perovskite compound oxide, which may have been eludedand recrystallized, enclose particles of a perovskite compound oxide (LaCe) (FeCo)O₃ of 25 to 30 »m. The fine particles also partially enclose particles of a heat resistant oxide (CeZrY)O₂ of 3 to 5 »m.

### X-Ray Diffraction Analysis

Only the catalytic layer was scraped off from the sample of Example 12 before the endurance test to collect powder, which in turn was subjected to material identification through X-ray diffraction. From its peak profile, it was observed that LaFeO perovskite phases (JCPDS card 37-1493) and CeO phases (JCPDS card 34-0394) were dominant with a slight amount of Pd phases (JCPDS card 5-0681). No other phases were observed, and it was confirmed that the composition eluded in carrying of Pd again formed perovskite phases by firing.

The features disclosed in the foregoing description, in the claims and/or in the accompanying drawings may, both, separately and in any combination thereof, be material for realising the invention in diverse forms thereof.

**Table 1**

| No. | Composition of Catalyst (Weight ratio) | | | Purification Factor | | |
|---|---|---|---|---|---|---|
| | Perovskite Compound Oxide | Heat Resistant Oxide | Precious Metal | CO | C₃H₆ | NO |
| 1 | [50]La_{0.8}Ce_{0.2}CoO₃ | [50](CeZrY)O₂ | [0.5]Pd | 85 | 83 | 85 |
| 2 | [50]La_{0.8}Ce_{0.2}Co_{0.4}Fe_{0.6}O₃ | [50](CeZrY)O₂ | [0.5]Pd | 93 | 86 | 92 |
| 3 | [50]La_{0.8}Ce_{0.2}Co_{0.4}Fe_{0.6}O₃ | [50](CeZrY)O₂ | [0.5]Pd | 91 | 85 | 86 |
| 4 | [50]La_{0.9}Ce_{0.1}Co_{0.4}Fe_{0.6}O₃ | [50](CeZrY)O₂ | [0.5]Pt | 89 | 81 | 80 |
| 5 | [50]La_{0.8}Sr_{0.2}Co_{0.5}Fe_{0.5}O₃ | [50](CeZrLa)O₂ | [0.5]Pd | 93 | 85 | 87 |
| 6 | [20]La_{0.8}Ce_{0.2}Co_{0.4}Fe_{0.6}O₃ | [80](CeZrY)O₂ | [0.5]Pd | 86 | 84 | 84 |
| 7 | [80]La_{0.59}Nd_{0.29} Ce_{0.12}Co_{0.5}Fe_{0.5}O₃ | [20](CeZrY)O₂ | [0.5]Pd | 87 | 84 | 85 |
| 8 | [50]La_{0.8}Ce_{0.2}Co_{0.4}Fe_{0.6}O₃ | [50](CeZr)O₂ | [0.5]Pd | 85 | 82 | 83 |
| 9 | [80]La_{0.8}Ce_{0.2}Co_{0.4}Fe_{0.6}O₃ | [20](CeZr)O₂ | [0.5]Pd | 88 | 80 | 87 |
| 10 | [80]La_{0.8}Sr_{0.2}Co_{0.4}Fe_{0.6}O₃ | [20](CeZr)O₂ | [0.5]Pd | 86 | 80 | 85 |
| C1 | [100]La_{0.8}Ce_{0.2}Co_{0.4}Fe_{0.6}O₃ | ----- | [0.5]Pd | 82 | 70 | 68 |
| C2 | [50]La_{0.8}Ce_{0.2}CoO₃ | [50]CeO₂ | [0.5]Pd | 73 | 68 | 61 |
| C3 | [50]La_{0.8}Ce_{0.2}CoO₃ | [50]γ-Al₂O₃ | [0.5]Pd | 61 | 57 | 55 |
| C4 | [50]La_{0.8}Ce_{0.2}Co_{0.4}Fe_{0.6} | [50]SrZrO₃ | [0.5]Pd | 85 | 80 | 80 |

**Table 2**

| No | Starting System [Weight ratio] | | | Soln. pH | Firing |
|---|---|---|---|---|---|
| | Perovskite Compound Oxide | Heat Resistant Oxide | Precious Metal | | |
| 11 | [100](La_{0.8}Ce_{0.2})(Co_{0.4}Fe_{0.6})O₃ | | [2.5]Pd | 0.2 | 600°C |
| 12 | [50](La_{0.8}Ce_{0.2})(Co_{0.4}Fe_{0.6})O₃ | [50](Ce_{0.65}Zr_{0.3}Y_{0.05})O₂ | [1.1]Pd | 0.2 | 600°C |
| 13 | [50](La_{0.8}Ce_{0.2})(Co_{0.4}Fe_{0.6})O₃ | [50](Ce_{0.65}Zr_{0.3}Y_{0.05})O₂ | [1.1]Pd | 0.2 | 250°C |
| 14 | [50](La_{0.8}Ce_{0.2})(Co_{0.4}Fe_{0.6})O₃ | [50](Ce_{0.65}Zr_{0.3}Y_{0.05})O₂ | [1.1]Pd | 1.7 | 600°C |
| 15 | [50](La_{0.8}Ce_{0.2})(Co_{0.4}Fe_{0.6})O₃ | [50](Ce_{0.65}Zr_{0.3}Y_{0.05})O₂ | [1.1]Pd | 3.0 | 600°C |
| 16 | [50](La_{0.8}Ce_{0.2})(Co_{0.4}Fe_{0.6})O₃ | [50](Ce_{0.65}Zr_{0.3}Y_{0.05})O₂ | [1.1]Pd | 4.0 | 600°C |
| 17 | [20](La_{0.8}Ce_{0.2})(Co_{0.4}Fe_{0.6})O₃ | [80](Ce_{0.65}Zr_{0.3}La_{0.05})O₂ | [0.44]Pd | 0.2 | 600°C |
| 18 | [80](La_{0.8}Ce_{0.2})CoO₃ | [20](Ce_{0.8}Zr_{0.2})O₂ | [3.52]Pd | 1.1 | 600°C |
| 19 | [20](La_{0.8}Ce_{0.2})CoO₃ | [80]CeO₂ | [1.76]Pd | 1.4 | 600°C |
| 20 | [50](La_{0.9}Ce_{0.1})(Co_{0.4}Fe_{0.6})O₃ | [50](Ce_{0.65}Zr_{0.3}Y_{0.05})O₂ [1.0]Ru | [0.3]Pt | 0.5 | 600°C |
| a | [50](La_{0.8}Ce_{0.2})(Co_{0.4}Fe_{0.6})O₃ | [50](Ce_{0.65}Zr_{0.3}Y_{0.05})O₂ | [1.1]Pd | 6.9 | 600°C |
| b | [50](La_{0.8}Ce_{0.2})(Co_{0.4}Fe_{0.6})O₃ | [50](Ce_{0.65}Zr_{0.3}Y_{0.05})O₂ | [1.1]Pd | 8.5 | 600°C |
| c | [50](La_{0.8}Ce_{0.2})(Co_{0.4}Fe_{0.6})O₃ | [50](Ce_{0.65}Zr_{0.3}Y_{0.05})O₂ | [1.1]Pd | 9.7 | 600°C |
| d | [50](La_{0.8}Sr_{0.2})(Co_{0.4}Fe_{0.6})O₃ | [50]SrZrO₃ | [1.1]Pd | 1.7 | 600°C |
| e | | [100]γ-Al₂O₃ | [0.43] Pt-Rh | 1.8 | 250°C |
| f | | [100]γ-Al₂O₃ | [1.13]Pd | 1.4 | 250°C |

**Table 4**

| 50% Purification Temperature ( °C ) | | | | | | |
|---|---|---|---|---|---|---|
| No. | Initial Temperature | | | After Endurance Test | | |
| | NO | CO | HC | NO | CO | HC |
| Example | | | | | | |
| 11 | 119 | 117 | 122 | 212 | 241 | 239 |
| 12 | 121 | 113 | 123 | 198 | 192 | 207 |
| 13 | 141 | 140 | 155 | 205 | 222 | 225 |
| 14 | 125 | 119 | 137 | 205 | 215 | 229 |
| 15 | 168 | 168 | 172 | 248 | 264 | 264 |
| 16 | 200 | 199 | 206 | 271 | 276 | 276 |
| 17 | 187 | 176 | 178 | 261 | 257 | 265 |
| 18 | 121 | 111 | 132 | 212 | 195 | 225 |
| 19 | 145 | 135 | 148 | 237 | 214 | 237 |
| 20 | 157 | 155 | 157 | 208 | 243 | 242 |

| Comparative Example | | | | | | |
|---|---|---|---|---|---|---|
| a | 236 | 227 | 242 | 370 | 332 | 349 |
| b | 253 | 245 | 256 | 374 | 288 | 332 |
| c | 233 | 225 | 236 | 432 | 365 | 382 |
| d | 317 | 306 | 341 | >500 | 394 | 393 |
| e | 198 | 193 | 208 | 259 | 263 | 276 |
| f | 175 | 185 | 186 | 301 | 318 | 313 |

## Claims

1. An exhaust gas purifying catalyst comprising a perovskite compound oxide being expressed by a general formula Ln₁-xAxMO₃, where Ln represents La or La and Nd, A represents Ce or Sr, M represents Co or Co and Fe and 0<x<1, a heat resistant oxide and at least one precious metal, characterized in that
said heat resistant oxide contains Ce and Zr, with or without at least one rare earth metal excluding Ce, said heat resistant oxide being at least partially in the form of a compound oxide or a solid solution.

2. An exhaust gas purifying catalyst in accordance with claim 1, wherein said heat resistant oxide includes 5 to 100 atoms of said Zr and 0 to 100 atoms of said rare earth metal excluding Ce per 100 atoms of said Ce.

3. An exhaust gas purifying catalyst in accordance with claim 1, wherein said precious metal is selected from the platinum group.

4. An exhaust gas purifying catalyst comprising a perovskite compound oxide being expressed by a general formula La₁-x CexMO₃, where M represents Co or Co and Fe and 0<x<1, and a precious metal, characterized in that said perovskite compound comprises a core part and an outer part, said outer part being formed around said core part and having said precious metal solidly dissolved therein.

5. An exhaust gas purifying catalyst in accordance with claim 4, characterized by further comprising a heat resistant oxide of Ce, or a heat resistant oxide containing Ce and Zr, or further containing at least one rare earth metal excluding Ce, said heat resistant oxide containing Ce and Zr being at least partially in the form of a compound oxide and/or a solid solution.

6. An exhaust gas purifying catalyst in accordance with claim 5, wherein said heat resistant oxide containing Ce and Zr includes 5 to 100 atoms of said Zr and 0 to 100 atoms of said rare earth metal excluding Ce per 100 atoms of said rare earth metal excluding Ce per 100 atoms of Ce.

7. An exhaust gas purifying catalyst in accordance with any of claims 4, 5 and 6, wherein said precious metal or an oxide of said precious metal is dispersed in a fine particle state.

8. An exhaust gas purifying catalyst in accordance with any of claims 4, 5, 6 and 7, wherein said precious metal is selected from the platinum group.

9. An exhaust gas purifying catalyst in accordance with claim 8, wherein said precious metal is Pd.

10. A method of preparing an exhaust gas purifying catalyst according to claim 4 or 5, comprising the steps of preparing a substance consisting of a perovskite compound oxide being expressed by a general formula La₁-xCexMO₃, where M represents Co or Co and Fe and 0<x<1, or a mixture of said perovskite compound oxide and a heat resistant oxide, impregnating and/or adsorbing a precious metal into said substance through a precious metal salt solution containing 0.2 to 5.0 parts by weight of a precious metal in precious metal conversion based on 100 parts by weight of said substance, driyng said treated substance and firing said treated substance at a temperature of 250 to 800 °C, characterized in that said precious metal salt solution is adjusted to be not more than pH 4.

## Patentansprüche

1. Ein Katalysator zum Reinigen von Abgasen, mit einem Pervoskit-Verbundoxid, das durch eine allgemeine Formel Ln₁-xAxMO₃ ausgedrückt wird, wobei Ln entweder La oder La und Nd darstellt, A entweder Ce oder Sr darstellt, M entweder Co oder Co und Fe darstellt und O < x < 1 ist, mit einem hitzebeständigen Oxid und mit wenigstens einem Edelmetall,
dadurch gekennzeichnet, daß
das hitzebeständige Oxid Ce und Zr mit oder ohne wenigstens einem Seltenerdmetall außer Ce aufweist, und wobei das hitzebeständige Oxid wenigstens teilweise in der Form eines Verbundoxids oder einer festen Lösung ist.

2. Ein Katalysator zum Reinigen von Abgasen nach Anspruch 1, wobei das hitzebeständige Oxid 5 bis 10 Atome des Zr und 0 bis 100 Atome des Seltenerdmetalls außer Ce pro 100 Atome des Ce aufweist.

3. Ein Katalysator zum Reinigen von Abgasen nach Anspruch 1, wobei das Edelmetall aus der Platingruppe ausgewählt ist.

4. Ein Katalysator zum Reinigen von Abgasen, mit einem Pervoskit-Verbundoxid, das durch eine allgemeine Formel La₁-x CexMO₃ ausgedrückt wird, wobei M entweder Co oder Co und Fe darstellt und 0 < x < 1 ist, und mit einem Edelmetall, dadurch gekennzeichnet, daß der Perovskit-Verbund einen Kernteil und einen äußeren Teil aufweist, wobei der äußere Teil um den Kernteil herum gebildet ist und ein Edelmetall hat, das in diesem fest gelöst ist.

5. Ein Katalysator zum Reinigen von Abgasen nach Anspruch 4, dadurch gekennzeichnet, daß er weiter ein hitzebeständiges Oxid aus Ce oder ein hitzebeständiges Oxid, das Ce und Zr aufweist, oder weiter wenigstens ein Seltenerdmetall aus Ce beinhaltet, wobei das hitzebeständige Oxid, das Ce und Zr aufweist, wenigstens teilweise in der Form eines Verbundoxids und/oder einer festen Lösung vorhanden ist.

6. Ein Katalysator zum Reinigen von Abgasen nach Anspruch 5, wobei das hitzebeständige Oxid, das Ce und Zr aufweist, 5 bis 100 Atome des Zr und 0 bis 100 Atome des Seltenerdmetalls außer Ce pro 100 Atome des Seltenerdmetalls außer Ce pro 100 Atome des Ce aufweist.

7. Ein Katalysator zum Reinigen von Abgasen nach einem der Anspruche 4, 5 oder 6, wobei das Edelmetall oder ein Oxid des Edelmetalls in einem Zustand feiner Partikel dispergiert ist.

8. Ein Katalysator zum Reinigen von Abgasen nach einem der Ansprüche 4, 5, 6 und 7, wobei das Edelmetall aus der Platingruppe gewählt ist.

9. Ein Katalysator zum Reinigen von Abgasen nach Anspruch 8, wobei das Edelmetall Pd ist.

10. Ein Verfahren zum Herstellen eines Katalysators zum Reinigen von Abgasen nach Anspruch 4 oder 5, mit den Stufen des Herstellens einer aus einem Perovskit-Verbundoxid, das durch eine allgemeine Formel La₁-xCexMO₃ ausgedrückt wird, bestehenden Substanz, wobei M entweder Co oder aber Co und Fe darstellt und 0 < x < 1 gilt, oder einer Mischung des Perovskit-Verbundoxids und eines hitzebeständigen Oxids, Imprägnieren und/oder Adsorbieren eines Edelmetalls in die Substanz durch eine Edelmetall-Salzlösung, die 0,2 bis 5,0 Gewichtsteile des Edelmetalls aufweist, in einer Edelmetallkonversion basierend auf 100 Gewichtsteilen der Substanz, Trocknen der behandelten Substanz und Brennen der behandelten Substanz bei einer Temperatur von 250 bis 800°C, dadurch gekennzeichnet, daß die Edelmetall-Salzlösung auf einen pH von nicht mehr als 4 eingestellt ist.

## Revendications

1. Catalyseur d'épuration des gaz d'échappement, comprenant un oxyde à base de composé pérovskite représenté par la formule globale Ln₁-xAxMO₃, dans laquelle Ln représente La ou La et Nd, A représente Ce ou Sr, M représente Co ou Co et Fe et 0<x<1, un oxyde thermorésistant et au moins un métal précieux, caractérisé par le fait que
ledit oxyde thermorésistant contient Ce et Zr, avec au moins un métal de terre rare ou pas, à l'exclusion de Ce, ledit oxyde thermorésistant se présentant au moins partiellement sous la forme d'un composé oxyde ou d'une solution de solide.

2. Catalyseur d'épuration de gaz d'échappement selon la revendication 1 dans lequel ledit oxyde thermorésistant comprend 5 à 100 atomes dudit Zr et 0 à 100 atomes dudit métal de terre rare, à l'exclusion du Ce, pour 100 atomes dudit Ce.

3. Catalyseur d'épuration de gaz d'échappement selon la revendication 1, dans lequel ledit métal précieux est choisi dans le groupe du platine.

4. Catalyseur d'épuration de gaz d'échappement comprenant un oxyde à base de composé pérovskite représenté par la formule globale La₁-x CexMO₃, dans laquelle M représente Co ou Co et Fe et 0<x<1, et un métal précieux, caractérisé par le fait que ledit composé pérovskite comprend une partie noyau et une partie extérieure, ladite partie extérieure étant formée autour de ladite partie noyau et avec en son sein ledit métal précieux dissout sous forme solide.

5. Catalyseur d'épuration de gaz d'échappement selon la revendication 4, caractérisé par le fait qu'il comprend en outre un oxyde thermorésistant de Ce, ou un oxyde thermorésistant contenant Ce et Zr, ou contenant en outre au moins un métal de terre rare à l'exclusion de Ce, ledit oxyde thermorésistant contenant Ce et Zr se présentent au moins partiellement sous la forme d'un composé oxyde et/ou d'une solution de solide.

6. Catalyseur d'épuration de gaz d'échappement selon la revendication 5, dans lequel ledit oxyde thermorésistant contenant Ce et Zr comprend 5 à 100 atomes dudit Zr et 0 à 100 atomes dudit métal de terre rare, à l'exclusion de Ce, pour 100 atomes dudit métal de terre rare à l'exclusion de Ce, pour 100 atomes du Ce.

7. Catalyseur d'épuration de gaz d'échappement selon l'une quelconque des revendications 4, 5 et 6, dans lequel ledit métal précieux ou un oxyde dudit métal précieux est dispersé à l'état de fines particules.

8. Catalyseur d'épuration de gaz d'échappement selon l'une quelconque des revendications 4, 5, 6 et 7, dans lequel ledit métal précieux est choisi dans le groupe du platine.

9. Catalyseur d'épuration de gaz d'échappement selon la revendication 8, dans lequel ledit métal précieux est Pd.

10. Procédé de préparation d'un catalyseur d'épuration de gaz d'échappement selon la revendication 4 ou 5, comprenant les étapes de : préparation d'une substance consistant en un oxyde à base de composé pérovskite représenté par une formule globale La₁-xCexMO₃, dans laquelle M représente Co ou Co et Fe et 0<x<1, ou un mélange dudit oxyde à base de composé pérovskite et un oxyde thermorésistant, imprégnation et/ou adsorption d'un métal précieux dans ladite substance par l'intermédiaire d'une solution de sel de métal précieux contenant 0,2 à 5,0 parties en poids d'un métal précieux, selon une conversion de métal précieux basée sur 100 parties en poids de ladite substance, entraînement de ladite substance traitée et mise à feu de ladite substance traitée à une température de 250 à 800°C, caractérisé par le fait que ladite solution de sel de métal précieux est déterminée pour ne pas dépasser un pH de 4.
